(19) Europäisches Patentamt
European Patent Office
Office européen des brevets

(11) Veröffentlichungsnummer : **0 079 303**
**B1**

(12) # EUROPÄISCHE PATENTSCHRIFT

(45) Veröffentlichungstag der Patentschrift : **05.03.86**

(51) Int. Cl.⁴ : **C 09 B 67/22**, C 09 B 67/20

(21) Anmeldenummer : **82810442.2**

(22) Anmeldetag : **25.10.82**

(54) **Stabilisierte deckende Form von C.I. Pigment Gelb 74.**

(30) Priorität : **31.10.81 GB 8132859**

(43) Veröffentlichungstag der Anmeldung : **18.05.83 Patentblatt 83/20**

(45) Bekanntmachung des Hinweises auf die Patenterteilung : **05.03.86 Patentblatt 86/10**

(84) Benannte Vertragsstaaten : **CH DE FR GB IT LI NL**

(56) Entgegenhaltungen :
**CH-A- 247 985**
**FR-A- 2 226 440**
**FR-A- 2 394 584**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Hamilton, Alexander**
**60 Courthill Avenue**
**Cathcart Glasgow Scotland G44 5AB (GB)**
Erfinder : **MacLennan, Alexander Hope**
**218 Glasgow Road**
**Paisley Scotland PA1 3DR (GB)**
Erfinder : **Newton, Christopher**
**7 Murchison Road Craigends Houston**
**Johnstone Renfrewshire Scotland PA6 7JU (GB)**

**EP 0 079 303 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft neue Formen von C.I. Pigment Gelb 74, die in Anwendungsystemen stabil sind.

C.I. Pigment Gelb 74 ist ein kommerziell wichtiges Pigment, das erfolgreich in verschiedenen Systemen verwendet wird, z. B. in Dekorationslacken und in Alkyd/Melanin-Formaldehyd-Lacken, in wässerigen Dispersionsfarben und in wässerigen Tinten.

C.I. Pigment Gelb 74 ist in zwei Formen im Handel erhältlich. Es gibt eine sehr farbstarke, transparente Form und eine weniger farbstarke, opake Form für Anwendungen, wo hohe Lichtechtheit und Deckfähigkeit verlangt werden.

Die transparente Form stellt man her, indem man das Diazoniumsalz von 5-Nitro-2-aminoanisol mit Acetoacetyl-2-anisidid kuppelt, das Gemisch auf 70 °C erwärmt und auf einmal filtriert. Die deckende Form dagegen stellt man her, indem man die gleiche Kupplungsreaktion durchführt, nachher aber das Gemisch während einer Stunde siedet, bevor man es filtriert. Man nimmt an, dass der Farbstärkeunterschied (die transparente Form ist ungefähr zweimal farbstärker als die deckende Form) eher auf verschiedenen Kristallgrössen als auf verschiedenen Kristallformen beruht.

Die opake Form von C.I. Pigment Gelb 74 hat den Nachteil, dass sie beim Lagern im Anwendungsmedium (das auf einem Lösungsmittel oder auf Wasser basieren kann) rasch an Farbstärke verliert. Das kann auf ein Wachstum der Pigmentteilchen zurückzuführen sein. Verschiedene Versuche, dieses Problem zu lösen, scheiterten. Beispielsweise versuchte man es mit Dispergiermitteln oder indem man Ausgangsstoffe varierender Qualität verwendete, um das Pigment herzustellen.

In der GB-Patentanmeldung 2,000,172A werden Mischungen von C.I. Pigment Gelb 74 mit dem aus 3-Nitro-4-aminoanisol und Acetoacetyl-2-anisidid abgeleiteten Pigment beschrieben. Diese Mischungen sollen sich jedoch durch eine hohe Farbstärke, einen hohen Glanz und eine sehr gute Transparenz auszeichnen. Aus der GB-Patentanmeldung sind jedoch keine Hinweise auf die deckende Form von C.I. Pigment Gelb 74 oder auf die dieser Form eigenen Lagerbeständigkeitsproblemen zu entnehmen.

Gegenstand der vorliegenden Erfindung ist somit eine neue Form des deckenden C.I. Pigment Gelb 74, wobei die Probleme des Farbstärkeverlustes bei der Lagerung in Anwendungssystemen überwunden werden.

Wenn man nur in opakes C.I. Pigment Gelb 74 eine kleinere Menge eines verschiedenen Monoazo-Gelbpigmentes einverleibt, das aus der gleichen Kupplungskomponente, die man zur Herstellung von C.I. Pigment Gelb 74 braucht, aber aus einem verschiedenen Amin gewonnen wird, so weist das resultierende Pigment überraschenderweise eine stark verbesserte Stabilität in wässerigen und nicht-wässerigen Systemen auf. Dabei entsprechen seine färberischen Eigenschaften mindestens denen, die man bei auf herkömmliche Art hergestellten C.I. Pigment Gelb 74 beobachtet.

Demnach betrifft die vorliegende Erfindung eine stabilisierte deckende Form von C.I. Pigment Gelb 74, enthaltend eine Mischung aus

a) 99,0 bis 80,0, bevorzugt 97,5 bis 92,5 Gew.-% C.I. Pigment Gelb 74 und

b) 1,0 bis 20,0 bevorzugt 2,5 bis 7,5 Gew.-% eines von C.I. Pigment Gelb 74 verschiedenen Monoazo-Gelbpigmentes auf der Basis von Acetoacetyl-2-anisidid.

Die erfindungsgemässe stabilisierte deckende Form von C.I. Pigment Gelb 74 wird hergestellt, indem man eine Mischung der oben definierten Komponenten a) und b) bildet.

Die erfindungsgemässen Mischungen können nach verschiedenen Verfahren hergestellt werden, beispielsweise indem man

(I) die Komponente a) und b) trocken miteinander vermischt,

(II) die Pigmentfilterkuchen der Komponenten a) und b) vermischt und anschliessend auf übliche Art trocknet,

(III) eine Mischung der jeweiligen Amine diazotiert und auf übliche Art kuppelt, das Kupplungsgemisch zum Sieden erhitzt, filtriert und trocknet,

(IV) die jeweiligen Amine getrennt diazotiert und die Diazolösungen mischt, bevor man auf übliche Art kuppelt, zum Sieden erhitzt, filtriert und trocknet,

(V) die Amine getrennt diazotiert und kuppelt und anschliessend die wässerigen Suspensionen mischt, bevor man zum Sieden erhitzt, filtriert und trocknet,

(VI) diazotieren und Kuppeln des einen Amins, dann Kuppeln und Diazotieren des zweiten Amins in Gegenwart des zuerst entstandenen Pigmentes, und anschliessend zum Sieden erhitzt, filtriert und trocknet.

Die Verfahren (III), (IV) und (VI) insbesondere (III), sind bevorzugt.

Zur Herstellung der Komponente b) bevorzugt man ein oder mehrere Amine der Formel I

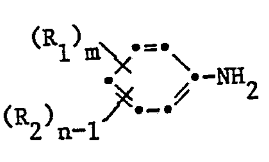

(I)

worin m und n ganze Zahlen von 1 bis 3 bedeuten, m + n höchstens 3 bedeutet, $R_1$ und $R_2$ nichtwasserlöslich machende Reste bedeuten, vorzugsweise Alkyl mit 1 bis 6 C-Atomen, vor allem Methyl oder Aethyl, Alkoxy mit 1 bis 6 C-Atomen, Halogen, vor allem Chlor, oder Nitro.

Von besonderem Interesse sind die Amine 4-Nitro-2-aminoanisol, 4-Methyl-2-nitroanilin, 2-Methyl-5-nitroanilin und 3-Nitro-4-aminoanisol.

Ein besonders bevorzugtes Verfahren besteht darin, 1,0 bis 20,0 Gew.-%, bevorzugt 2,5 bis 7,5 Gew.-% 4-Nitro-2-aminoanisol in 5-Nitro-2-aminoanisol einzuverleiben, die erhaltene Mischung zu diazotieren und auf übliche Art mit Acetoacetyl-2-anisidid zu kuppeln. Das so erhaltene Pigment ist ein Gemisch von zwei Pigmenten.

Die Eigenschaften der erfindungsgemässen Pigmente können durch übliche Nachbehandlungen verbessert werden. Mögliche Nachbehandlungen sind beispielsweise :

(I) Zugabe eines wasserlöslichen Farbstoffes, zum Beispiel eines wasserlöslichen Monoazo-Farbstoffes. Dieses Verfahren ist z. B. aus dem US Patent 3,759,733 bekannt, wo ebenfalls die Einverleibungsmethoden im einzelnen beschrieben sind. Der adsorbierte lösliche Farbstoff kann nötigenfalls in einem späteren Stadium unlöslich gemacht werden, indem beispielsweise mit Metallen der Gruppen IA, IB, IIA, IIB, IIIA, IIIB und VIII des Periodensystems unlösliche Salze gebildet werden.

Beispiele von wasserlöslichen Salzen dieses Typs findet man in US 3,759,733. In der Regel gibt man bis zu 25 Gew.-%, bevorzugt 1 bis 10 Gew.-% löslichen Farbstoff zu, bezogen auf die erfindungsgemäss hergestellte Pigmentmischung.

(II) Nachbehandlung mit einem Lösungsmittel. Geeignete Lösungsmittel sind insbesondere polare aliphatische Lösungsmittel, die mindestens teilweise mit Wasser mischbar sind, wie beispielsweise $C_1$-$C_4$-Alkohole, kurzkettige Monocarboxylate, niedere Alkylketone oder kurzkettige Alkoxyalkanole oder Glykole. Die Lösungsmittelnachbehandlung von Pigmenten ist im einzelnen in US 3,532,030 beschrieben.

(III) Wärmenachbehandlung der erfindungsgemässen Pigmente unter sauren, basischen oder neutralen Bedingungen.

(IV) Nachbehandlung der erfindungsgemässen Pigmente mit langkettigen Alkoholen, Estern, Aminen oder Amiden, oder mit nicht-ionischen, kationischen oder anionischen oberflächenaktiven Mitteln, und mit Kolophoniumharzen. Beispiele solcher Additive sind in GB 1,486,117 oder in GB 1,589,159 beschrieben, beispielsweise Carbonsäureester und Amide, wie Glycerintristearat, Dicyclohexylphthalat und Xylamide, Harze, wie Kohlenwasserstoffharze und wasserunlösliche Fettalkohole, wie Cetylalkohol auch Kolophoniumharze verschiedener Typen, inklusiv der chemisch modifizierten Formen, können verwendet werden.

(V) Umwandlung in staubfreie, freifliessende kugelförmige Produkte (vgl. VGB 1,589,159).

(VI) Umwandlung in staubfreie, freifliessende Granulate (vgl. GB 2,009,204 und GB 2,036,057).

Die erfindungsgemässen Pigmente zeichnen sich im Vergleich zum gewöhnlichen opaken C.I. Pigment Gelb 74 durch ihre verbesserte Lagerstabilität aus, wenn sie ins Anwendungsmedium eingearbeitet werden.

Die Pigmente können als trockenes Pulver isoliert und dann in eine wässerige Paste übergeführt werden. Demnach betrifft ein weiterer Erfindungsgegenstand eine wässerige Pigmentpaste, enthaltend das stabilisierte Pigmentgemisch aus den Komponentan a) und b) zusammen mit einem oder mehreren der üblichen Hilfsstoffe für Pigmentpasten, besonders mit Dispergierungsmitteln, und Wasser.

Die wässerigen Pigmentpasten können durch Mahlen, z. B. in einer Kugelmühle, des erfindungsgemässen Pigmentes in Wasser und Mahlweise in Gegenwart von Hilfsmitteln, wie z. B. nichtionischen oberflächenaktiven Mitteln (wie äthoxyliertes Nonylphenol), Aethylenglykol und einem Biocid hergestellt werden.

Die erfindungsgemässen wässerigen Pigmentpasten eignen sich als stabile Farbstoffe für die Pigmentierung von wässerigen Farben, insbesondere von wässerigen Oberflächenüberzügen, wie Dispersionsfarben.

Wenn nicht anders vermerkt, bedeuten in den folgenden Beispielen Teile Gewichtsteile und Prozente Gewichtsprozente.

## Beispiel 1

9,1 Teile 5-Nitro-2-aminoanisol und 0,234 Teile 4-Nitro-2-aminoanisol werden in 13,5 Teile Chlorwasserstoffsäure enthaltendes Wasser aufgeschlämmt. Man diazotiert das Gemisch mit 3,86 Teilen Natriumnitrit in 4,5 Teilen Wasser, während man während der Diazotierung die Reaktionstemperatur bei 0 °C hält. Dann wird das Ganze filtriert, und das Filtrat wird auf 120 Teile bei 0 °C ergänzt.

12,10 Teile Acetoacetyl-2-anisidid werden in 125 Teilen 2,43 Teile Natriumhydroxyd enthaltendes Wasser gelöst. Das Aceto-acetyl-2-anisidid wird wieder ausgefällt indem man innert 10 Minuten 3,68 Teile 80 %-ige Essigsäure in 35,5 Teilen Wasser zugibt. Dann gibt man 5,92 Teile Natriumacetat zu und stellt den pH-Wert der Lösung auf 6,5 ein. Das Endvolumen der Kupplungskomponenten wird auf 225 Teile bei 15 °C ergänzt.

Die Kupplung erfolgt dann innerhalb von 1 Stunde, wobei man sicherstellt, dass die Diazokomponente nie im Ueberschuss vorliegt. Am Schluss beträgt der pH-Wert ungefähr 4,3. Wenn die Kupplung beendet ist, erwärmt man das Reaktionsgemisch zum Siedepunkt und hält diese Temperatur während

einer Stunde. Man kühlt dann auf 70 °C ab, filtriert das Pigment, wäscht es chloridfrei und trocknet den Filterkuchen bei 70 °C. Man erhält die stabilisierte deckende Form von C.I. Pigment Gelb 74.

Beispiel 2

8,85 Teile 5-Nitro-2-amino-anisol und 0,468 Teile 4-Nitro-2-amino-anisol werden in 13,15 Teile Chlorwasserstoffsäure enthaltendes Wasser aufgeschlämmt. Man diazotiert das Gemisch mit 3,86 Teilen Natriumnitrit in 4,5 Teilen Wasser, während man die Reaktionstemperatur bei 0 °C hält. Dann wird filtriert und das Filtrat wird auf 120 Teile ergänzt.

12,10 Teile Acetoacetyl-2-anisidid werden in 125 Teilen 2,43 Teile Natriumhydroxid enthaltendem Wasser gelöst. Das Acetoacetyl-2-anisidid wird wieder ausgefällt, indem man 3,68 Teile 80 %-ige Essigsäure in 35,5 Teilen Wasser zugibt. Man fügt 5,92 Teile Natriumacetat hinzu und stellt den pH-Wert der Lösung auf 6,5 ein. Das Endvolumen der Kupplungskomponente ergänzt man auf 225 Teile bei 15 °C.

Die Kupplung erfolgt dann innerhalb von 1 Stunde, wobei man sicherstellt, dass die Diazokomponente nie im Ueberschuss vorliegt. Am Schluss beträgt der pH-Wert 4,3. Nach beendeter Kupplung erhitzt man zum Siedepunkt und hält diese Temperatur während 1 Stunde. Man kühlt auf 70 °C ab und gibt 30 Minuten vor dem Filtrieren 0,43 Teile eines nichtionischen oberflächenaktiven Mittels zu (mit 6 Mol Aethylenoxid kondensiertes Nonylphenol). Man rührt das Reaktionsgemisch während 30 Minuten, filtriert das Pigment ab und wäscht es chloridfrei. Nach dem Trocknen des Filterkuchens bei 70 °C erhält man die stabilisierte deckende Form vor C.I. Pigment Gelb 74, das leicht in wässerige Medien eingearbeitet werden kann.

Beispiel 3

435 Teile nach Beispiel 1 oder 2 erhaltenes Pigmentpulver werden in 378 Teile Wasser aufgeschlämmt, das 100 Teile Monoäthylenglykol und 87 Teile eines nichtionischen oberflächenaktiven Mittels enthält. Die Aufschlämmung wird dann vordispergiert, indem man sie während 10 Minuten in einem Hochgeschwindigkeitshomogenisator rührt. Der pH-Wert wird auf 8-9 eingestellt, nötigenfalls durch Zugabe von 100 %-iger wässeriger Natronlauge. Die vollständige Dispergierung erfolgt dann auf übliche Art. Die erhaltene Paste wird in eine Dispersionsfarbe eingearbeitet. Ein Vergleich mit einem nach gleichem Verfahren, mit gleichen Additiven aber mit einer konventionellen opaken Form von C.I. Pigment Gelb 74 hergestellten Paste zeigt keine wesentlichen koloristischen Unterschiede. Wenn man jedoch nach einer beschleunigten Lagerung während 48 Stunden bei 40 °C die beiden Pasten nochmals in einer Dispersionsfarbe prüft, so hat die auf einer konventionellen opaken Form von C.I. Pigment Gelb 74 basierenden Paste 20 % Farbstärke verloren gegenüber der Paste mit der stabilisierten Form gemäss Beispiel 1 oder 2.

Beispiel 4

Man stellt auf übliche Art die Diazolösung (1) aus 97,5 Teilen 5-Nitro-2-aminoanisol her und ergänzt auf 1 300 Teile bei 0 °C. Getrennt davon stellt man die Diazolösung (2) her aus 2,5 Teilen 4-Nitro-2-aminoanisol und ergänzt auf 50 Teile bei 0 °C.

Man stellt eine Aufschlämmung einer Kupplungskomponente her, indem man 127 Teile Acetoacetyl-2-anisidid und 26 Teile Natriumhydroxid in 1 000 Teilen Wasser löst und diese Lösung zu einer gerührten Lösung aus 49 Teilen 80 %-iger Essigsäure in 400 Teilen Wasser zufliessen lässt. Man fügt 65 Teile Natriumacetat-Trihydrat hinzu, stellt den pH-Wert auf 6,0 und die Temperatur auf 15 °C ein. Man ergänzt die Aufschlämmung auf 2 400 Teile. Die Diazolösungen (1) und (2) werden vermischt und dann innerhalb von ungefähr 1 Stunde zur Kupplungskomponente gegeben. Am Schluss beträgt der pH-Wert ca. 4,3. Die Pigmentsuspension wird innerhalb 30 Minuten mit Dampf auf 95-100 °C erwärmt und während 1 Stunde bei dieser Temperatur gehalten. Man kühlt auf 70 °C und filtriert das Pigment ab, wäscht es von wasserlöslichen Salzen frei und trocknet es bei 70 °C. Das Produkt ist die deckende Form von C.I. Pigment Gelb 74, das eine ausnehmend stabile Farbstärke zeigt, wenn es in Farbsysteme eingearbeitet wird.

Beispiel 5

Man geht wie in Beispiel 4 vor, ausser dass die Diazolösungen (1) und (2) vor der Kupplung nicht vermischt werden. Statt dessen lässt man zuerst die Diazolösung (1) innerhalb von ungefähr 1 Stunde, dann die Diazolösung (2) in ca. 5-10 Minuten zur Suspension der Kupplungskomponente zufliessen. Das resultierende gelbe Pigment zeigt die gleiche verbesserte Farbstärkenstabilität wie das Produkt aus Beispiel 4.

Beispiel 6

Man geht wie in Beispiel 4 vor, ausser dass die Diazolösungen (1) und (2) vor der Kupplung nicht

vermischt werden. Statt dessen lässt man zuerst die Diazolösung (2) innerhalb von 5 bis 10 Minuten, darauf die Diazolösung (1) innerhalb von ungefähr einer Stunde zur Suspension der Kupplungskomponente zufliessen. Das resultierende gelbe Pigment zeigt die gleiche Farbstärkenstabilität wie das Produkt aus Beispiel 4.

Beispiel 7

41,95 Teile 5-Nitro-2-amino-anisol und 2,0 Teile 4-Methyl-2-nitro-anilin werden mit 61,0 Teilen 35,5 %-iger Salzsäure und 75 Teilen Wasser zu einer homogenen Paste vermischt. Man diazotiert bei 0 °C durch Zugabe einer Lösung aus 18,25 Teilen Natriumnitrit in 40 Teilen Wasser. Nach beendeter Reaktion klärt man die Diazolösung durch Zugabe von Aktivkohle und Filtration.

Man stellt eine Suspension der Kupplungskomponente her, indem man 56,2 Teile Aceto-acetyl-2-anisidid und 11,4 Teile Natriumhydroxid in 600 Teilen Wasser löst und dann diese Lösung innerhalb 10 Minuten in eine gerührte Lösung von 17,2 Teilen Eisessigsäure in 150 Teilen Wasser zufliessen lässt. Man fügt dann 28,0 Teile Natriumacetat-trihydrat hinzu und ergänzt auf 1 000 Teile bei 15 °C und Wasser und/oder Eis.

Innerhalb vor ungefähr 1 Stunde gibt man die Diazolösung unter Rühren zur Kupplungskomponente. Nach der Kupplung liegt der pH-Wert bei 4,3. Die gelbe Pigmentsuspension wird innerhalb 30 Minuten auf 95-100 °C erwärmt und während 1 Stunde bei dieser Temperatur gehalten. Man filtriert das Pigment ab, wäscht es von wasserlöslichen Verunreinigungen frei und trocknet es bei 70 °C.

Wenn man dieses Produkt in ein Dispersionsfarbensystem einarbeitet, zeigt es bei der Lagerung eine bessere Beibehaltung der Farbstärke als ein Produkt, das nach dem gleichen Verfahren aber ohne 4-Methyl-2-nitroanilin hergestellt wurde.

Beispiel 8

Man verfährt wie in Beispiel 7, ausser dass man 2,0 Teile 2-Methyl-5-nitroanilin verwendet anstelle von 2,0 Teilen 4-Methyl-2-nitroanilin. Wenn man dieses Produkt in ein Dispersionsfarbensystem einarbeitet, zeigt es eine verbesserte Beibehaltung der Farbstärke als ein gewöhnliches C.I. Pigment Gelb 74.

**Patentansprüche**

1. Eine stabilisierte deckende Form von C.I. Pigment Gelb 74, enthaltend eine Mischung von
a) 99,0 bis 80,0 Gew.-% C.I. Pigment Gelb 74 und
b) 1,0 bis 20,0 Gew.-% eines von C.I. Pigment Gelb 74 verschiedenen Monoazo-Gelb-Pigmentes auf der Basis von Acetoacetyl-2-anisidid.

2. Ein stabilisiertes Pigment gemäss Anspruch 1, worin der Anteil an Komponente a) 97,5 bis 92,5 Gew.-% und der Anteil an Komponente b) 2,5 bis 7,5 Gew.-% betragen.

3. Ein stabilisiertes Pigment gemäss Anspruch 1, enthaltend eine Komponente b) die von einem oder mehreren Aminen der Formel I

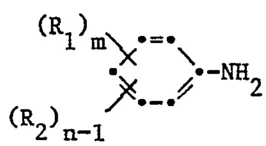

(I)

abgeleitet wird, worin m und n Zahlen von 1 bis 3 bedeuten, m + n höchstens 3 ist, $R_1$ und $R_2$ nicht-wasserlöslichmachende Reste bedeuten.

4. Ein stabilisiertes Pigment gemäss Anspruch 3, enthaltend eine Komponente b), die aus Aminen der Formel (I) abgeleitet wird, worin $R_1$ und $R_2$ Alkyl mit 1 bis 6 C-Atomen, Alkoxy mit 1 bis 6 C-Atomen, Halogen oder Nitro bedeuten.

5. Ein stabilisiertes Pigment gemäss Anspruch 4, enthaltend eine Komponente b), die als Amin der Formel (I) von 4-Nitro-2-aminoanisol, 4-Methyl-2-nitro-anilin, 2-Methyl-5-nitroanilin und/oder 3-Nitro-4-aminoanisol abgeleitet ist.

6. Verfahren zur Herstelllung einer stabilisierten deckenden Form von C.I. Pigment Gelb 74 gemäss Anspruch 1, dadurch gekennzeichnet, dass man eine Mischung der Komponenten a) und b) bildet.

7. Eine wässerige Pigmentpaste enthaltend die stabilisierte deckende Form von C.I. Pigment Gelb 74 gemäss Anspruch 1, ein oder mehrere Hilfstoffe für Pigmentpasten und Wasser.

**Claims**

1. A stabilised opaque form of C.I. Pigment Yellow 74 containing a mixture of :
a) 99.0 to 80.0 % by weight of C.I. Pigment Yellow 74 ; and

b) 1.0 to 20.0 % by weight of a monoazo yellow pigment different from C.I. Pigment Yellow 74 and based on acetoacetyl-2-anisidide.

2. A stabilised pigment according to claim 1, wherein the proportion of component a) is from 97.5 to 92.5 % by weight and that of component b) is from 2.5 to 7.5 % by weight.

3. A stabilised pigment according to claim 1 containing a component b) derived from one or more amines of the formula

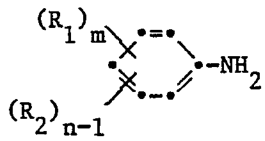

(I)

wherein each of m and n is an integer from 1 to 3, the sum of m and n is not more than 3, and $R_1$ and $R_2$ are groups which do not impart solubility in water.

4. A stabilised pigment according to claim 3 containing a component b) derived from amines of the formula (I), wherein $R_1$ and $R_2$ are alkyl having 1 to 6 carbon atoms, alkoxy having 1 to 6 carbon atoms, halogen or nitro.

5. A stabilised pigment according to claim 4 containing a component b) derived from 4-nitro-2-aminoanisole, 4-methyl-2-nitroaniline, 2-methyl-5-nitroaniline and/or 3-nitro-4-aminoanisole, as amine of the formula (I).

6. A process for producing a stabilised opaque form of C.I. Pigment Yellow 74 as defined in claim 1, which process comprises forming a mixture of components a) and b).

7. An aqueous pigment paste containing the stabilised opaque form of C.I. Pigment Yellow 74 as defined in claim 1 ; one or more conventional pigment paste adjuvants ; and water.

**Revendications**

1. Forme courante stabilisée du pigment jaune C.I. 74, qui contient un mélange constitué :

a) de 99,0 à 80,0 % en poids du pigment jaune C.I. 74 et

b) de 1,0 à 20,0 % en poids d'un pigment monoazoïque jaune qui est à base de N-acétoacétyl-o-anisidine mais qui est différent du pigment jaune C.I. 74.

2. Pigment stabilisé selon la revendication 1, dans lequel la proportion de la composante a) est de 97,5 à 92,5 % en poids et celle de la composante b) de 2,5 à 7,5 % en poids.

3. Pigment stabilisé selon la revendication 1 qui contient une composante b) dérivant d'une ou plusieurs amines répondant à la formule I :

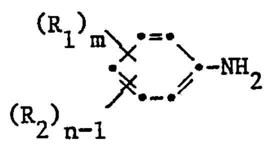

(I)

dans laquelle m et n désignent chacun un nombre de 1 à 3, la somme (m + n) étant au plus égale à 3, tandis que $R_1$ et $R_2$ représentent chacun un radical non hydrosolubilisant.

4. Pigment stabilisé selon la revendication 3, qui contient une composante b) dérivant d'amines de formule I dans lesquelles $R_1$ et $R_2$ représentent chacun un radical alkyle contenant de 1 à 6 atomes de carbone, un radical alcoxy contenant de 1 à 6 atomes de carbone, un atome d'halogène ou un radical nitro.

5. Pigment stabilisé selon la revendication 4, qui contient une composante b) dérivant d'une amine de formule I qui est l'amino-2 nitro-4 anisole, la nitro-2 méthyl-4 aniline, la méthyl-2 nitro-5 aniline et/ou le nitro-3 amino-4 anisole.

6. Procédé de préparation d'une forme couvrante stabilisée du pigment jaune C.I. 74 selon la revendication 1, procédé caractérisé en ce qu'on forme un mélange des composantes a) et b).

7. Pâte pigmentaire aqueuse qui contient la forme couvrante stabilisée du pigment jaune C.I. 74 selon la revendication 1, un ou plusieurs adjuvants pour pâtes pigmentaires et de l'eau.